# EUROPEAN PATENT APPLICATION

(11) **EP 4 535 764 A1**
(43) Date of publication of application: **09.04.2025**
(21) Application number: 23838399.6
(22) Date of filing: 07.02.2023
(51) Int. Cl.: H04L 69/00

(54) **PACKET GENERATION METHOD, PACKET TRANSMISSION METHOD, NETWORK DEVICE, MEDIUM, AND PRODUCT**

(30) Priority: 11.07.2022 CN 202210808767
(71) Applicant: ZTE Corporation, Shenzhen, Guangdong 518057 (CN)
(72) Inventor: XU, Benchong, Shenzhen, Guangdong 518057 (CN); ZHANG, Zheng, Shenzhen, Guangdong 518057 (CN)
(74) Representative: Ziebig Hengelhaupt Intellectual Property Attorneys Patentanwaltskanzlei PartGmbB
(86) International application number: PCT/CN2023/074846
(87) International publication number: WO 2024/011897

(57) **Abstract**

Embodiments of the present application provide a packet generation method, a multicast packet transmission method, a network device, a computer readable storage medium, and a computer program product. The packet generation method is applied to a multicast network. The method comprises: adding at least one piece of the following information into a protocol independent multicast (PIM) join packet: network slice information; and network topology information.

## Description

### CROSS REFERENCE TO RELATED APPLICATION

The present application is based on and claims the benefit of priority from Chinese Patent Application No. 202210808767.1, filed on July 11, 2022, the entirety of which is incorporated herein by reference.

### TECHNICAL FIELD

Embodiments of the present application relate to the field of communication technology, in particular to a packet generation method, a packet transmission method, a network device, a readable storage medium, and a program product.

### BACKGROUND

With the development of wireless communication technology, network slicing technology for on-demand networking has emerged to meet the increasing service demands. Network slicing refers to dividing a physical network of a service provider into a plurality of virtual networks, with each virtual network corresponding to one network topology. Network slicing can respond to different network application scenarios based on different service demands.

In some cases, there are various modes of network communication, such as unicast, multicast, etc. Unicast transmission has been adopted in network slicing, whereas multicast transmission related technologies are less commonly used. Therefore, how to apply multicast forwarding slicing technology is an urgent issue that needs to be discussed and solved.

### SUMMARY

Embodiments of the present application provide a packet generation method, a multicast packet transmission method, a network device, a computer readable storage medium, and a computer program product, which is intended to implement multicast in a specified network slice or network topology.

In a first aspect, an embodiment of the present application provides a packet generation method applied to a multicast network, the method includes adding at least one piece of the following information into a protocol independent multicast (PIM) join packet: network slice information; and network topology information.

In a second aspect, an embodiment of the present application provides a multicast packet transmission method applied to a first network node, wherein at least one of network slice information or network topology information is configured into a first protocol independent multicast (PIM) join packet; and a configured first protocol independent multicast (PIM) join packet is transmitted to a second network node.

In a third aspect, an embodiment of the present application provides a network device including: a memory, a processor, and a computer program stored in the memory and executable on the processor, the computer program, when executed by the processor, implements the packet generation method of the first aspect or the multicast packet transmission method of the second aspect.

In a fourth aspect, an embodiment of the present application provides a computer-readable storage medium, including: the computer-readable storage medium stores computer-executable instructions, wherein the computer-executable instructions are used to execute the packet generation method of the first aspect or the multicast packet transmission method of the second aspect.

In a fifth aspect, an embodiment of the present application provides a computer program product, the computer program or the computer instruction is stored in a computer-readable storage medium, a processor of a computer device reads the computer program or the computer instruction from the computer-readable storage medium, and the processor executes the computer program or the computer instruction, such that the computer device implements the packet generation method of the first aspect or the multicast packet transmission method of the second aspect.

### BRIEF DESCRIPTION OF DRAWINGS

FIG. 1 is a schematic diagram of a multicast network architecture;
FIG. 2 is a flow chart of a packet generation method provided by an embodiment of the present application;
FIG. 3 is a schematic diagram of fields of PIM flexible algorithm attribute information provided by an embodiment of the present application;
FIG. 4 is a schematic diagram of fields of PIM slice identification attribute information provided by an embodiment of the present application;
FIG. 5 is a schematic diagram of fields of PIM topology identification attribute information provided by an embodiment of the present application;
FIG. 6 is a schematic diagram of fields of PIM flexible algorithm attribute information and topology identification attribute information provided by an embodiment of the present application;
FIG. 7 is a schematic diagram of fields of PIM slice identification attribute information and topology identification attribute information provided by an embodiment of the present application;
FIG. 8 is a flow chart of a multicast packet transmission method provided by an embodiment of the present application;
FIG. 9 is a flow chart of a multicast packet transmission method provided by an embodiment of the present application;
FIG. 10 is a schematic diagram of a multicast topology network structure provided by an embodiment of the present application;
FIG. 11 is a schematic diagram of a multicast topology network structure provided by an embodiment of the present application; and
FIG. 12 is a schematic structural diagram of a network device provided by an embodiment of the present application.

### DETAILED DESCRIPTION

In order to clarify the objects, technical solutions and advantages of the present application, the present application will be further explained in detail below in conjunction with the accompanying drawings and embodiments. It should be understood that the specific embodiments described here are merely used to illustrate the present application and are not intended to be limiting.

It should be noted that although functional modules are divided in a schematic diagram of an apparatus and a logical order is shown in a flow chart, in some cases, the steps shown or described can be performed in a different order than the module division in the apparatus or the order in the flowchart. The terms "first", "second", and the like in the description and in the claims are used to distinguish between similar objects rather than necessarily describing a specific sequence or order.

In the description of the embodiments of the present application, unless otherwise clearly defined, terms such as "set", "install", "connect" and the like should be understood in a broad sense, and those skilled in the art can reasonably determine the specific meanings of the above terms in the embodiments of the present application based on the specific content of the technical solution. In the embodiments of the present application, words such as "further", "exemplarily" or "optionally" are used to indicate examples, illustrations or descriptions, and should not be construed as being more preferred or more advantageous than other embodiments or designs. The use of the words "further", "exemplarily" or "optionally" is intended to present related concepts in a specific way.

The embodiments of the present application may be applied to various wireless communication systems, such as Global System of Mobile Communication (GSM) system, Code Division Multiple Access (CDMA) system, Wideband Code Division Multiple Access (WCDMA) system, General Packet Radio Service (GPRS), Long Term Evolution (LTE) system, LIE-A (Advanced Long Term Evolution) system, Universal Mobile Telecommunication System (UMTS), 5G, Beyond Fifth Generation (B5G), 6th Generation (6G) system, etc.; the embodiments of the present application may be applied to various wired communication systems, fixed networks, bearer networks, base station backhaul networks, etc., which is not limited by the embodiments of the present application.

The embodiments of the present application may be applied to a multicast network. Multicast generally refers to that packets are sent from a source and forwarded to a group of specific receivers, with at most one copy of the same packet on each link. Compared with unicast and broadcast, multicast can effectively save the network bandwidth and the reduce network load, and is widely applied to network services such as IPTV, video conferencing, real-time data transmission, and multimedia conferencing.

There are various multicast protocols, such as Internet Group Management Protocol (IGMP) and Protocol Independent Multicast (PIM). The embodiments of the present application are mainly applied to PIM and may also be applied to other related network scenarios, which is not limited by the embodiments of the present application. In order to set forth the technical solution in detail, a multicast network application scenario is taken as an example, so as to further illustrate the related art of the present application.

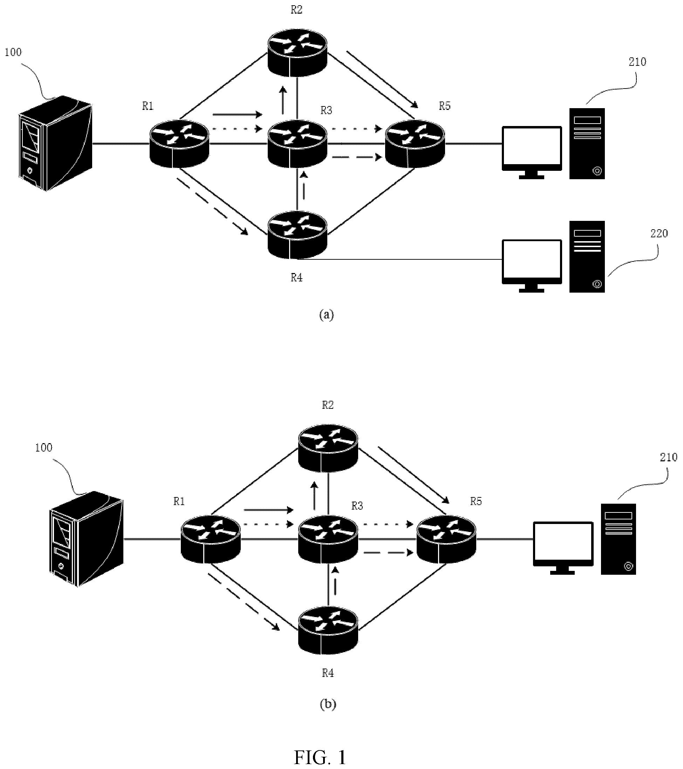

FIG. 1 is a schematic diagram of a multicast network architecture, which includes a schematic diagram of a multicast network structure shown in FIG. 1(a) and a schematic diagram of a multicast topology shown in FIG. 1(b).

As shown in FIG. 1(a), a multicast network system includes a multicast source such as a multicast source device 100, a plurality of multicast receivers such as a first multicast user device 210 and a second multicast user device 220, and a plurality of network nodes such as a first network node (first routing) R1, a second network node (second routing) R2, a third network node (third routing) R3, a fourth network node (fourth routing) R4, and a fifth network node (fifth routing) R5. A network node may be a rendezvous node such as the fifth route R5, and may also be other nodes such as an edge node, central node, sensor node, cluster head node, etc.

FIG. 1(b) is a schematic diagram of a part of multicast topology in the network multicast architecture of FIG. 1(a), as shown in FIG. 1(b), a plurality of paths may be implemented from the first multicast user device 210 to the multicast source device 100.

The fifth network node R5, which is directly connected to the first multicast user device 210, may use a Shortest Path First (SPF) algorithm to select the shortest path for forwarding across the entire network topology based on Interior Gateway Protocol (IGP), that is, the fifth network node R5 - the third network node R3 - the first network node R1 - the multicast source device 100.

If Flexible Algorithm (Flex-Argo) is supported by unicast routing, the fifth network node R5 may perform calculation to obtain different paths based on different Flex-Argos. Three paths are shown in FIG. 1.

Path 1: the fifth network node R5 - the second network node R2 - the third network node R3 - the first network node R1 - the multicast source device 100.

Path 2: the fifth network node R5 - the third network node R3 - the first network node R1-- the multicast source device 100.

Path 3: the fifth network node R5 - the third network node R3 - the fourth network node R4 - the first network node R1 - the multicast source device 100.

Flex-Algo is a flexible algorithm that allows a user to independently create individual topology and calculate paths in IGP. The algorithm range that can be customized by a user is Flex-Algo (128) ~ Flex-Algo (255), and there may be 128 algorithms in total. Each Flex-Algo algorithm may be represented by Flex-Algo (k), wherein k is an integer between 128-255. Flex-Algo (k) only has local meaning in a logical topology involved in this algorithm and has only a unique definition. The working process of Flex-Algo mainly includes 4 steps: defining an algorithm, announcing the algorithm, generating a topology, and calculating a path. In the case that Flex-Algo is supported by a unicast routing protocol, it can be avoided that due to all packets select the shortest path, all services have fixed traffic paths and network resources cannot be utilized flexibly.

In a multicast network, protocol independent multicast (PIM) is a widely used multicast protocol. In the multicast network architecture shown in FIG. 1, network slicing technology has not yet been applied in PIM.

Embodiments of the present application provide a packet generation method, a packet transmission method, a network device, a readable storage medium, and a program product, by means of relevant attributes of an extended PIM protocol, the PIM can designate a network slice or topology to join a multicast tree.

In order to facilitate understanding of embodiments of the present application, PIM-related technology is described.

PIM is a protocol applied to router multicast forwarding. The implementation of PIM relies on interworking of unicast routing in a network, that is, a multicast network must first complete construction of a unicast routing table.

A multicast routing table is constructed in the PIM , the table includes four items: a multicast source (multicast source IP address), a multicast group (multicast IP address), a multicast upstream interface, and a multicast downstream interface. By means of the multicast routing table, a network node or router can determine an upstream interface (incoming) and downstream interface (outgoing) of a certain multicast traffic transmitted from a multicast source.

PIM is classified into a DM mode and an SM mode. These two modes differ in the way of constructing a multicast distribution tree and a multicast routing table. The packets in DM mode mainly include Hello packet, Join/Prune packet, Graft packet, Graft-ACK packet, and Assert packet. The packets in SM mode mainly include Hello packet, Join/Prune packet, Assert packet, Register packet, Register-Stop packet, Bootstrap packet, and Candidate-RP-Advertisement packet.

The Join packet is used to join a multicast distribution tree, and the Prune packet is used to inform an upstream port not to transmit multicast traffic to the current node, which is equivalent to pruning the multicast distribution tree.

In embodiment of the present application, network slice information or network topology information is added to a PIM JOIN packet, such that the PIM can designate a network slice or topology to join the multicast tree.

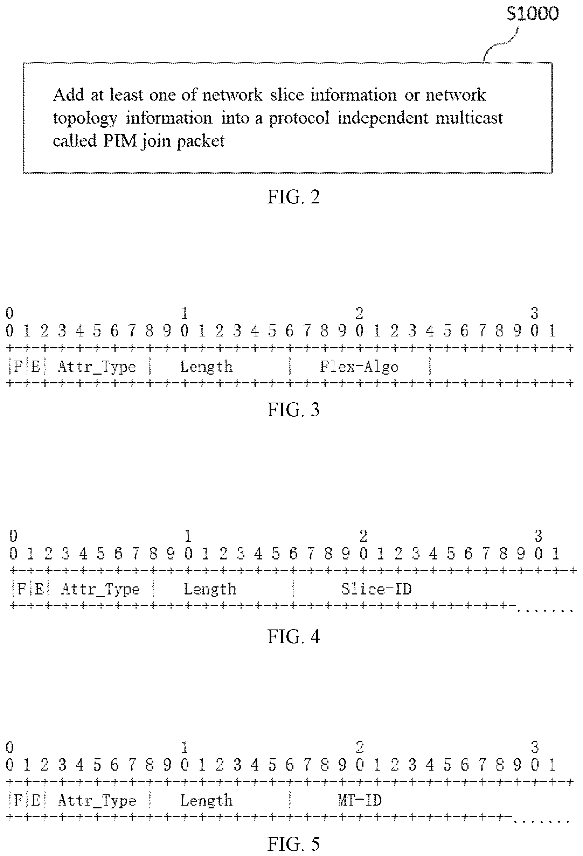

FIG. 2 is a flow chart of a packet generation method provided by an embodiment of the present application. As shown in FIG. 2, the packet generation method is applied to a user device. In the embodiment of FIG. 2, the packet generation method can include, but is not limited to, step S1000.

At S1000: at least one of network slice information or network topology information is added to a protocol independent multicast (PIM) join packet.

In some embodiments, network slice information is added to the protocol independent multicast (PIM) join packet. Network slice information can characterize relevant attributes of a network slice, and by adding network slice information to a PIM join packet, a corresponding unicast routing can be found in the designated network slice.

In one embodiment, the network slice information is flexible algorithm (Flex-Algo) attribute information. FIG. 3 is a schematic diagram of fields of PIM flexible algorithm attribute information provided by an embodiment of the present application, as shown in the figure, the flexible algorithm (Flex-Algo) attribute information includes a default F field, an E field, a flexible algorithm type (Attr_Type) field, a flexible algorithm length (Length) field, and a flexible algorithm value (Flex-Algo) field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The flexible algorithm type (Attr_Type) field may be any value that has not been assigned. The flexible algorithm length (Length) field is used to identify the length of a Flex-Algo field in bytes. The flexible algorithm value (Flex-Algo) field is used to identify a specific value of the flexible algorithm, generally ranging from 128 to 255.

In one embodiment, the network slice information is slice identification attribute information. FIG. 4 is a schematic diagram of fields of PIM slice identification attribute information provided by an embodiment of the present application, as shown in the figure, the slice identification attribute information includes a default F field, an E field, a slice identification type (Attr_Type) field, a slice identification length (Length) field, and a slice identification value (Slice-ID) field. The F field is used to identify a forwarding attribute, if the F field is set, the attribute is a forwardable attribute; otherwise, the attribute the attribute is a non-forwardable attribute. The E field is used to identify the end of an attribute, if the E field is set, it indicates the last join attribute in the code join source address field. The slice identification type (Attr_Type) field may be any value that has not been assigned. The slice identification length (Length) field is used to identify the length of a slice identification value (Slice-ID) field in bytes. The slice identification value (Slice-ID) field is used to represent a specific value of the slice identification, generally ranging from 0-0xFFFFFFFF.

In one embodiment, network topology information is added to a protocol independent multicast (PIM) join packet. Network topology information can characterize relevant attributes of a network topology, and by adding network topology information to a PIM join packet, a corresponding unicast routing can be found in the designated network topology.

In one embodiment, the network topology information is topology identification attribute information. FIG. 5 is a schematic diagram of fields of PIM topology identification attribute information provided by an embodiment of the present application, as shown in the figure, the topology identification attribute information includes a default F field, an E field, a topology identification type (Attr_Type) field, a topology identification length (Length) field, and a topology identification value (MT-ID) field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The topology identification type (Attr_Type) field may be any value that has not been assigned. The topology identification length (Length) field is used to identify the length of a topology identification value (MT-ID) field in bytes. The topology identification value (MT-ID) field is used to represent a specific value of the topology identification, generally ranging from 0-0xFFFFFFFF.

In some embodiments, network slice information and network topology information are added to a protocol independent multicast (PIM) join packet.

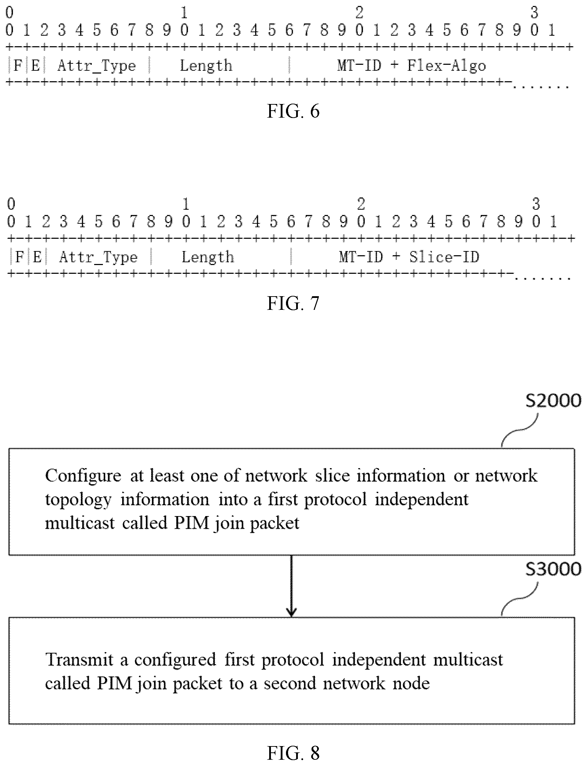

In one embodiment, flexible algorithm (Flex-Algo) attribute information and topology identification attribute information are added to a protocol independent multicast (PIM) join packet. FIG. 6 is a schematic diagram of fields of PIM flexible algorithm attribute information and topology identification attribute information provided by an embodiment of the present application, as shown in the figure, the fields include a default F field, an E field, an attribute type (Attr_Type) field, a Length field of a length of MT-ID plus a length of Flex-Algo, and MT-ID and Flex-Algo value field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The attribute type (Attr_Type) field may be any value that has not been assigned. The Length field is used to identify the length of MT-ID plus the length of Flex-Algo in bytes. The flexible algorithm value (Flex-Algo) field is used to identify a specific value of the flexible algorithm, generally ranging from 128-255; the topology identification value (MT-ID) field is used to represent a specific value of the topology identification, generally ranging from 0-0xFFFFFFFF.

In one embodiment, slice identification (Slice-ID) attribute information and topology identification attribute information are added to a protocol independent multicast (PIM) join packet. FIG. 7 is a schematic diagram of fields of PIM slice identification attribute information and topology identification attribute information provided by an embodiment of the present application, as shown in the figure, the fields include a default F field, an E field, an attribute type (Attr_Type) field, a Length field of a length of MT-ID plus a length of Slice-ID, and MT-ID and Slice-ID value field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The attribute type (Attr_Type) field may be any value that has not been assigned. The Length field is used to identify the length of MT-ID plus the length of Slice-ID in bytes. The slice identification value (Slice-ID) field is used to represent a specific value of the slice identification, generally ranging from 0-0xFFFFFFFF; the topology identification value (MT-ID) field is used to represent a specific value of the topology identification, generally ranging from 0-0xFFFFFFFF.

It should be noted that, in the above embodiments, at least one of the network slice information and the network topology information is configured in a join source address field in the protocol independent multicast (PIM) join packet. In some embodiments, when a multicast tree rooted at a multicast source is constructed, the join source address field carries multicast source address information. In other embodiments, when a multicast tree rooted at a rendezvous point (RP) is constructed, the join source address field carries rendezvous point address information. The address information carried in the join source address field may result in different query results for unicast routing.

FIG. 8 is a flow chart of a multicast packet transmission method provided by an embodiment of the present application. As shown in FIG. 8, the packet generation method is applied to a user device. In the embodiment of FIG. 2, the packet generation method can include, but is not limited to, steps S2000 and S3000.

At S2000: at least one of network slice information or network topology information is configured into a first protocol independent multicast (PIM) join packet.

It should be noted that for a current network node, at least one of network slice information or network topology information is added to the first protocol independent multicast (PIM) join packet, such that the PIM can designate a slice or topology to join a multicast tree.

At S3000: a configured first protocol independent multicast (PIM) join packet is transmitted to a second network node.

It should be noted that the first protocol independent multicast (PIM) join packet configured with at least one of network slice information or network topology information is transmitted to the second network node, such that the second network node can also perform unicast routing query in a designated network slice or network topology according to the information configured in the PIM join packet.

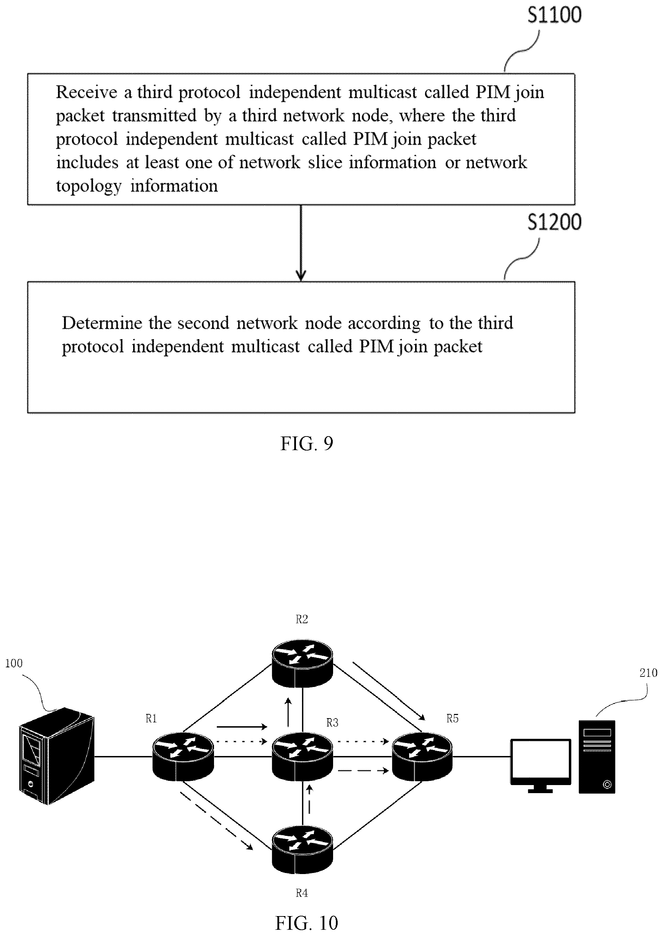

In one embodiment, FIG. 9 is a flow chart of a multicast packet transmission method provided by an embodiment of the present application. As shown in FIG. 9, the multicast packet transmission method further includes steps S1100 and S 1200, the above-mentioned two steps are used to determine an upstream node of a current network node.

At S 1100: a third protocol independent multicast (PIM) join packet transmitted by a third network node is received, where the third protocol independent multicast (PIM) join packet includes at least one of network slice information or network topology information.

At S1200: the second network node is determined according to the third protocol independent multicast (PIM) join packet.

In one embodiment, a network slice or network topology is determined according to at least one of network slice information or network topology information in the third protocol independent multicast (PIM) join packet, a unicast routing is determined in the network slice or network topology, and then a second network node is determined according to the unicast routing.

In one embodiment, a join source address field in the third protocol independent multicast (PIM) join packet carries network slice information, a unicast routing is determined by a current network node according to the address information carried in the join source address field and the network slice information.

In one embodiment, a join source address field in the third protocol independent multicast (PIM) join packet carries network topology information, a unicast routing is determined by a current network node according to the address information carried in the join source address field and the network topology information.

In one embodiment, a join source address field in the third protocol independent multicast (PIM) join packet carries network slice information and network topology information, a unicast routing is determined by a current network node according to the address information carried in the join source address field together with the network slice information and the network topology information.

In one embodiment, the third protocol independent multicast (PIM) join packet includes network slice information and vector attribute information, the attributes configured in an earlier part of the packet is of higher priority and thus takes effect preferentially.

In one embodiment, the third protocol independent multicast (PIM) join packet includes network topology information and vector attribute information, the attributes configured in an earlier part of the packet is of higher priority and thus takes effect preferentially.

In one embodiment, the third protocol independent multicast (PIM) join packet includes network slice information, network topology information and vector attribute information, the attributes configured in an earlier part of the packet is of higher priority and thus takes effect preferentially.

In one embodiment, the third protocol independent multicast (PIM) join packet includes network slice information and vector attribute information, and any one of them can be randomly selected to take effect.

In one embodiment, the third protocol independent multicast (PIM) join packet includes network slice information and vector attribute information, any one of the two information and discarded packets can be randomly selected to take effect.

It can be understood that, when the third protocol independent multicast PIM join packet includes a plurality of attribute information, one of them can be selected to take effect. In some embodiments, discarded packets can also be selected for processing.

It should be noted that, in join packets of the same source address and group address transmitted by a plurality of network node devices, the Flex-Algo attribute information is inconsistent, for example, the Flex-Algo attribute is inconsistent, including whether the Flex-Algo attribute is carried or the Flex-Algo attribute is carried but with a different Flex-Algo value. In this case, an optimal selection is made according to the size of source address of packets, and the join packets take effect in a descending or ascending order of address. It can be understood that, if there are behaviors going beyond the scope of description of embodiments of the present application, all behaviors will be processed as existing behaviors according to the PIM protocol.

In another embodiment, if a current network node cannot query a unicast routing according to network slice information or network topology information, a best-effort forwarding mode is used for forwarding. It should be noted that, the best-effort forwarding mode refers to that no Flex-Algo is designated to query a unicast routing, and a unicast routing querying method predefined in the PIM protocol is used to perform querying and forwarding.

In another embodiment, if a current network node cannot query a unicast routing according to network slice information or network topology information, a strict-policy mode is used for processing. It should be noted that the strict-policy mode refers to that a current forwarded packet that is unreachable according to a routing is discarded.

In order to further illustrate the packet generation method and packet transmission method provided by the embodiments of the present application, the following embodiments are used for illustration.

### Example 1:

FIG. 10 is a schematic diagram of a multicast topology network structure provided by an embodiment of the present application. For the sake of simplicity, only one multicast user is shown in the figure, there are 5 network node devices for packet forwarding between the multicast user and the multicast source, an upstream network node device is selected based on a unicast routing calculation method between the multicast user and the multicast source.

There are a plurality of paths from the multicast user to the multicast source, according to some cases, the device R5 that is directly connected to the user selects the shortest path for forwarding based on a general unicast routing. In the case where Flex-Algo is supported by the unicast routing protocol, different Flex-Algos can perform calculation to obtain different paths. For example, according to the Flex-Algo (130) algorithm, the path from R5 to the multicast source is R2 to R3 to R1 to multicast source; according to the Flex-Argo (131) algorithm, the path from R5 to the multicast source is R3to R1 to multicast source; according to the Flex-Argo (132) algorithm, the path from R5 to the multicast source is R3 to R4to R1 to multicast source.

According to the extended PIM join packet provided by the above embodiments of the present application, flexible algorithm (Flex-Algo) attribute information is added to a join source address field of a PIM join packet. Flexible algorithm attribute information includes a default F field, an E field, a flexible algorithm type (Attr_Type) field, a flexible algorithm length (Length) field, and a flexible algorithm value (Flex-Algo) field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the join code source address field. The flexible algorithm type (Attr_Type) field may be any value that has not been assigned. The flexible algorithm length (Length) field is used to identify the length of the Flex-Algo field in bytes and is set to bit 1. The flexible algorithm value (Flex-Algo) field is used to identify a specific value of the flexible algorithm, generally ranging from 128 - 255 (0 - 127 is a reserved range).

R5 designates, based on policy, a unicast path-selection of a multicast group, or a multicast source, or a multicast source plus a multicast group to perform calculation by a specific Flex-Algo. For example, Flex-Argo (132) is designated for a multicast source S1 and a multicast group G1, in the case where R5 queries a unicast routing of the source, Flex-Argo (132) is designated to query a routing of the multicast source S1 and select an upstream neighbor (network node) R3. The corresponding PIM join packet of (S1, G1) transmitted from R5 to R3 carries Flex-Argo attribute information in a join source address field with a value of 132. After the packet is received by R3, R3 finds the carried Flex-Algo attribute information, and queries a routing to the multicast source S1 in Flex-Algo (132), finds an upstream neighbor R4 (network node), and continues to transmit PIM join packets to R4, and the corresponding join packet of (S1, G1) carries Flex-Algo attribute information in a join source address field with a value of 132. Similarly, after the packet is received by R4, R4 queries a routing to the multicast source S1 in Flex-Algo (132), finds an upstream neighbor R1 (network node), and continues to transmit PIM join packets to R1, and the corresponding join packet of (S1, G1) carries Flex-Algo attribute information in a join source address field with a value of 132. After the packet is received by R1, R1 finds that R1 itself is a directly-connected source, and will be processed as existing behaviors according to PIM protocol.

### Example 2:

In this example, the multicast topology network structure shown in FIG. 10 is used for description as well.

According to the extended PIM join packet provided by the above embodiments of the present application, slice identification (Slice-ID) attribute information is added to a join source address field of the PIM join packet. The slice identification attribute information includes a default F field, an E field, a slice identification type (Attr_Type) field, a slice identification length (Length) field, and a slice identification value (Slice-ID) field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The slice identification type (Attr_Type) field may be any value that has not been assigned. The slice identification length (Length) field is used to identify the length of a slice identification value (Slice-ID) field in bytes, which is set to 4 in this example. The slice identification value (Slice-ID) field is used to represent a specific value of the slice identification, generally ranging from 0 - 0xFFFFFFFF.

R5 designates, based on policy, a unicast path-selection of a multicast group, or a multicast source, or a multicast source plus a multicast group to perform calculation by a specific Slice-ID. For example, a specific Slice-ID is designated for a multicast source S1 and a multicast group G1, in the case where R5 queries a unicast routing of the source, a specific Slice-ID is designated to query a routing of the multicast source S1 and select an upstream neighbor (network node) R3. The corresponding PIM join packet of (S1, G1) transmitted from R5 to R3 carries specific Slice-ID attribute information in a join source address field. After the packet is received, R3 finds the carried specific Slice-ID attribute information, queries a routing to the multicast source S1 in the specific Slice-ID, finds an upstream neighbor R4 (network node), and continues to transmit PIM join packets to R4, and the corresponding join packet of (S1, G1) carries specific Slice-ID attribute information in a join source address field. Similarly, after the packet is received by R4, R4 queries a routing to the multicast source S1 in the specific Slice-ID, finds an upstream neighbor R1 (network node), and continues to transmit PIM join packets to R1, the corresponding join packet of (S1, G1) carries specific Slice-ID attribute information in a join source address field. After the packet is received, R1 finds that R1 itself is a directly-connected source, and will be processed as existing behaviors according to PIM protocol.

### Example 3:

In this example, the multicast topology network structure shown in FIG. 10 is used for description as well.

According to the extended PIM join packet provided by the above embodiments of the present application, topology identification (MT-ID) attribute information is added to a join source address field of the PIM join packet. The topology identification attribute information includes a default F field, an E field, a topology identification type (Attr_Type) field, a topology identification length (Length) field, and a topology identification value (MT-ID) field. The F field is used to identify a forwarding attribute, if the F field is set, the attribute is a forwardable attribute; otherwise, it is a non-forwardable attribute. The E field is used to identify the end of an attribute, if the E field is set, the attribute indicates the last join attribute in the code join source address field. The topology identification type (Attr_Type) field may be any value that has not been assigned. The topology identification length (Length) field is used to identify the length of a topology identification value (MT-ID) field in bytes, which is set to 4 in this example. The topology identification value (MT-ID) field is used to represent a specific value of the topology identification, generally ranging from 0 - 0xFFFFFFFF.

R5 designates a unicast path-selection of a multicast group, or a multicast source, or a multicast source plus a multicast group to perform calculation by a specific MT-ID based on policy. For example, a specific MT-ID is designated for a multicast source S1 and a multicast group G1, in the case where R5 queries a unicast routing of the source, a specific MT-ID is designated to query a routing of the multicast source S1 and select an upstream neighbor (network node) R3. The corresponding PIM join packet of (S1, G1) transmitted from R5 to R3 carries specific MT-ID attribute information in a join source address field. After the packet is received, R3 finds the carried specific MT-ID attribute information, queries a routing to the multicast source S1 in the specific MT-ID, finds an upstream neighbor R4 (network node), and continues to transmit PIM join packets to R4, the corresponding join packet of (S1, G1) carries specific MT-ID attribute information in a join source address field. Similarly, after the packet is received by R4, R4 queries a routing to the multicast source S1 in the specific MT-ID, finds an upstream neighbor R1 (network node), and continues to transmit PIM join packets to R1, the corresponding join packet of (S1, G1) carries specific MT-ID attribute information in a join source address field. After being received, R1 finds that R1 itself is a directly-connected source, and will be processed as existing behaviors according to PIM protocol.

### Example 4:

In this example, the multicast topology network structure shown in FIG. 10 is used for description as well. According to the extended PIM join packet provided by the above embodiments of the present application, flexible algorithm (Flex-Algo) attribute information and topology identification (MT-ID) attribute information are added to the protocol independent multicast (PIM) join packet. The fields include a default F field, an E field, an attribute type (Attr_Type) field, a Length field of a length of MT-ID plus a length of Flex-Algo, and MT-ID and Flex-Algo value field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The attribute type (Attr_Type) field may be any value that has not been assigned. The Length field is used to identify the length of MT-ID plus the length of Flex-Algo in bytes, which is set to 5 in this example. Slice identification value (Flex-Algo) field is used to represent a specific value of the flexible algorithm, generally ranging from 0-0xFFFFFFFF; the topology identification value (MT-ID) field is used to represent a specific value of the topology identification, generally ranging from 0 - 0xFFFFFFFF.

R5 designates a unicast path-selection of a multicast group, or a multicast source, or a multicast source plus a multicast group to perform calculation by a specific MT-ID and Flex-Algo based on policy. For example, a specific MT-ID and Flex-Argo are designated for a multicast source S1 and a multicast group G1, in the case where R5 queries a unicast routing of the source, a specific MT-ID and Flex-Argo are designated to query a routing of the multicast source S1 and select an upstream neighbor (network node) R3. The corresponding PIM join packet of (S1, G1) transmitted from R5 to R3 carries specific MT-ID and Flex-Argo attribute information in the join source address field. After the packet is received, R3 finds the carried specific MT-ID and Flex-Algo attribute information, queries a routing to the multicast source S1 in the specific MT-ID and Flex-Algo, finds an upstream neighbor R4 (network node), and continues to send PIM join packets to R4, the corresponding join packet of (S1, G1) carries specific MT-ID and Flex-Algo attribute information in a join source address field. Similarly, after the packet is received by R4, R4 queries a routing to the multicast source S1 in the specific MT-ID, finds an upstream neighbor R1 (network node), and continues to transmit PIM join packets to R1, the corresponding join packet of (S1, G1) carries specific MT-ID and Flex-Algo attribute information in a join source address field. After the packet is received, R1 finds that R1 itself is a directly-connected source, and will be processed as existing behaviors according to PIM protocol.

### Example 5:

In this example, the multicast topology network structure shown in FIG. 10 is used for description as well.

According to the extended PIM join packet provided by the above embodiments of the present application, slice identification (Slice-ID) attribute information and topology identification (MT-ID) attribute information are added to the protocol independent multicast (PIM) join packet. The fields include a default F field, an E field, an attribute type (Attr_Type) field, a Length field of a length of MT-ID plus a length of Slice-ID, an MT-ID and Slice-ID value field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The attribute type (Attr_Type) field may be any value that has not been assigned. The Length field is used to identify the length of MT-ID plus the length of Slice-ID in bytes, which is set to 5 in this example. The slice identification value (Slice-ID) field is used to represent a specific value of the slice identification, generally ranging from 0 - 0xFFFFFFFF; the topology identification value (MT-ID) field is used to represent a specific value of the topology identification, generally ranging from 0 - 0xFFFFFFFF.

R5 designates a unicast path-selection of a multicast group, or a multicast source, or a multicast source plus a multicast group to perform calculation by a specific MT-ID and Slice-ID based on policy. For example, a specific MT-ID and Slice-ID are designated for a multicast source S1 and a multicast group G1, in the case where R5 queries a unicast routing of the source, a specific MT-ID and Slice-ID are designated to query a routing of the multicast source S1 and select an upstream neighbor (network node) R3. The corresponding PIM join packet of (S1, G1) transmitted from R5 to R3 carries specific MT-ID and Slice-ID attribute information in a join source address field. After the packet is received, R3 finds the carried specific MT-ID and Slice-ID attribute information, queries a routing to the multicast source S1 in the specific MT-ID and Slice-ID, finds an upstream neighbor R4 (network node), and continues to transmit PIM join packets to R4, the corresponding join packet of (S1, G1) carries specific MT-ID and Slice-ID attribute information in a join source address field. Similarly, after the packet is received by R4, R4 queries a routing to the multicast source S1 in the specific MT-ID, finds an upstream neighbor R1 (network node), and continues to transmit PIM join packets to R1, the corresponding join packet of (S1, G1) carries specific MT-ID and Slice-ID attribute information in a join source address field. After the packet is received, R1 finds that R1 itself is a directly-connected source, and will be processed as existing behaviors according to PIM protocol.

### Example 6:

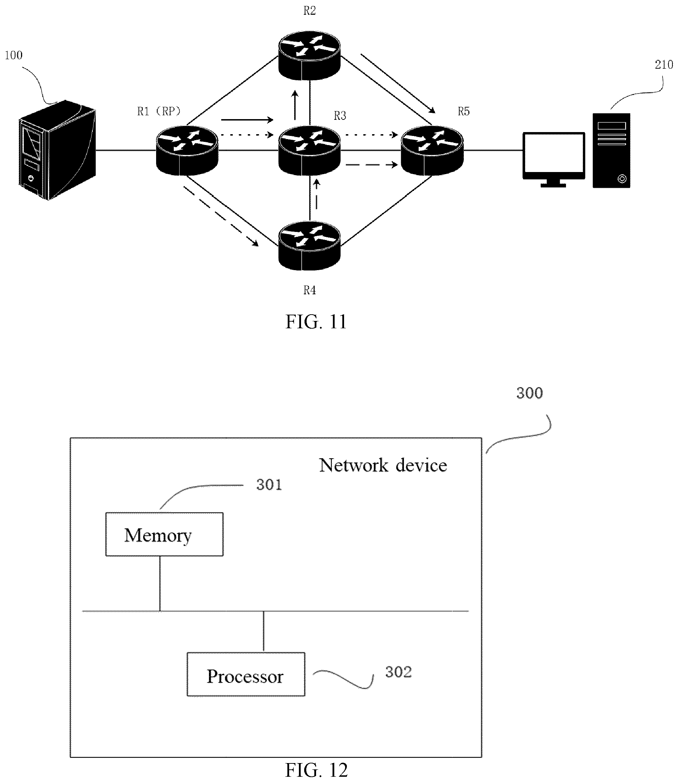

FIG. 11 is a schematic diagram of a multicast topology network structure provided by an embodiment of the present application, which differs from FIG. 10 in that the device R1 is used as a rendezvous point RP to construct an RP-based multicast tree, that is, when a PIM join packet is generated, an RP address is filled into a join source address field of the packet. Therefore, when querying a unicast routing of a source, a unicast routing to the RP is found instead.

There are a plurality of paths from a multicast user to the RP, and according to some cases, the device R5 that is directly connected to the user selects the shortest path for forwarding according to a general unicast routing. In the case where Flex-Algo is supported by the unicast routing protocol, different Flex-Algos can perform calculation to obtain different paths. For example, according to the Flex-Algo (130) algorithm, the path from R5 to the multicast source is R2 to R3 to R1(RP); according to the Flex-Argo (131) algorithm, the path from R5 to the multicast source is R3 to R1(RP); according to the Flex-Argo (132) algorithm, the path from R5 to the multicast source is R3 to R4 to R1(RP).

According to the extended PIM join packet provided by the above embodiments of the present application, flexible algorithm (Flex-Algo) attribute information is added to a join source address field of a PIM join packet. Flexible algorithm attribute information includes a default F field, an E field, a flexible algorithm type (Attr_Type) field, a flexible algorithm length (Length) field, and a flexible algorithm value (Flex-Algo) field. The F field is used to identify a forwarding attribute, if the F field is set, the attribute is a forwardable attribute; otherwise, the attribute is a non-forwardable attribute. The E field is used to identify the end of an attribute, if the E field is set, it indicates the last join attribute in the code join source address field. The flexible algorithm type (Attr_Type) field may be any value that has not been assigned. The flexible algorithm length (Length) field is used to identify the length of the Flex-Algo field in bytes and is set to bit 1. The flexible algorithm value (Flex-Algo) field is used to identify a specific value of the flexible algorithm, generally ranging from 128 - 255 (0 - 127 is a reserved range).

R5 designates a unicast path-selection of a multicast group, or a multicast source, or a multicast source plus a multicast group to perform calculation by a specific Flex-Algo based on policy. For example, Flex-Argo (132) is designated for a multicast source S1 and a multicast group G1, in the case where R5 queries a unicast routing of the source, Flex-Argo (132) is designated to query a unicast routing of the multicast source S1 and select an upstream neighbor (network node) R3. The corresponding PIM join packet of (S1, G1) transmitted from R5 to R3 carries Flex-Argo attribute information in a join source address field with a value of 132. After the packet is received, R3 finds the carried Flex-Algo attribute information, queries a routing to the multicast source S1 in Flex-Algo (132), finds an upstream neighbor R4 (network node), and continues to transmit PIM join packets to R4, the corresponding join packet of (S1, G1) carries Flex-Algo attribute information in a join source address field with a value of 132. Similarly, after the packet is received by R4, R4 queries a routing to the multicast source S1 in Flex-Algo (132), finds an upstream neighbor R1 (network node), and continues to transmit PIM join packets to R1, the corresponding join packet of (S1, G1) carries Flex-Algo attribute information in a join source address field with a value of 132. After the packet is received, R1 finds that R1 itself is an RP, and will be processed as existing behaviors according to PIM protocol.

It can be understood that no matter whether a multicast source is taken as the root of a multicast tree or an RP is taken as the root of a multicast tree, the principle of the unicast routing query method used in embodiments of the present application is the same, which is to query unicast routing in a specified network slice or network topology. Therefore, the packet transmission methods in the above example 2 to example 5 are still applicable in the application scenarios provided by this example.

FIG. 12 is a schematic structural diagram of a network device provided by an embodiment of the present application, as shown in FIG. 12, the network device 300 includes a memory 301 and a processor 302. The number of the memory 301 and the processor 302 can be one or more than one, in FIG. 12, one memory 301 and one processor 301 are taken as an example; the memory 301 and the processor 302 in the network device can be connected by a bus or other ways, in FIG. 12, a connection by a bus is taken as an example.

The memory 301 is a computer-readable storage medium that can be used to store software programs, computer-executable programs, and modules, such as program instructions/modules corresponding to the method provided in any embodiment of the present application. The processor 302 implements the above method provided by any of the above embodiments by running the software programs, instructions, and modules stored in the memory 301.

The memory 301 can primarily comprise a program storage area and a data storage area, wherein the program storage area can store an operating system and an application required for at least one function. In addition, the memory 301 can comprise a high-speed random access memory, and can also comprise a non-volatile memory, such as at least one disk storage device, a flash memory device or other non-volatile solid-state storage device. In some instances, the memory 301 further comprises a memory remotely disposed relative to the processor 302, and these remote memories can be connected to the device via network. Examples of the above-mentioned network include, but are not limited to, the Internet, an intranet, a local area network, a mobile communication network, and combinations thereof.

An embodiment of the present application further provides a computer-readable storage medium storing computer-executable instructions, wherein the computer-executable instructions are used to executes the packet generation method or multicast packet transmission method provided by any embodiment of the present application.

An embodiment of the present application further provides a computer program product, comprising a computer program or computer instruction, the computer program or computer instruction is stored in a computer-readable storage medium, a processor of a computer device reads the computer program or the computer instruction from the computer-readable storage medium, and the processor executes the computer program or the computer instruction, so that the computer device executes the packet generation method or multicast packet transmission method provided by any embodiment of the present application.

It is to be understood by those skilled in the art that all or some of the steps, systems, and functional modules/units in the systems and devices in the methods disclosed above can be implemented as software, firmware, hardware, and suitable combination thereof.

In hardware implementations, the division among functional modules/units mentioned in the above description does not necessarily corresponds to the division among physical components; for example, a physical component can have a plurality of functions, or a function or step can be performed by several physical components in cooperation. Some or all of the physical components can be implemented as software to be executed by a processor, such as a central processor, digital signal processor, or microprocessor, or as hardware, or as an integrated circuit, such as an application specific integrated circuit. Such software can be distributed on computer-readable media, which can include computer storage media (or non-transitory media) and communication media (or transitory media). As is well known to those skilled in the art, the term "computer storage media" includes volatile and nonvolatile, removable and non-removable media implemented in any method or technology for storage of information (such as computer readable instructions, data structures, program modules, or other data). Computer storage media includes, but is not limited to, RAM, ROM, EEPROM, flash memory or other memory technology, CD-ROM, digital versatile discs (DVD) or other optical disk storage, magnetic cassettes, magnetic tape, magnetic disk storage or other magnetic storage devices, or any other medium which can be used to store the desired information and is accessible by a computer. In addition, as is well known to those skilled in the art, communication media typically comprises computer readable instructions, data structures, program modules, or other data in a modulated data signal such as a carrier wave or other transport mechanism, and can include any information delivery media.

The terms "component", "module", "system" and the like used in this specification are used to denote a computer-related entity, hardware, firmware, a combination of hardware and software, software, or software in execution. For example, a component can be, but is not limited to, a process running on a processor, a processor, an object, an executable file, an execution thread, a program, or a computer. By way of illustration, both applications running on a computing device and a computing device can be components. One or more components can reside in a process or an execution thread, and a component can be located on a computer or distributed between two or more computers. In addition, these components can be executed from various computer-readable media having various data structures stored thereon. Components can, for example, communicate through a local or remote process based on a signal having one or more data packets (e.g., data from two components interacting with another component between a local system, a distributed system, or a network, such as the Internet interacting with other systems through signals).

## Claims

1. A packet generation method, applied to a multicast network, the method comprising:
adding at least one piece of the following information into a protocol independent multicast called PIM join packet:
network slice information; or
network topology information.

2. The method according to claim 1, wherein the network slice information comprises at least one of the following:
flexible algorithm attribute information; or
slice identification attribute information.

3. The method according to claim 1 or 2, wherein the network topology information at least comprises topology identification attribute.

4. The method according to claim 2, wherein the flexible algorithm attribute information at least comprises a flexible algorithm type field, a flexible algorithm length field and a flexible algorithm value field.

5. The method according to claim 2, wherein the slice identification attribute information at least comprises a slice identification type field, a slice identification length field and a slice identification value field.

6. The method according to claim 3, wherein the topology identification attribute at least comprises a topology identification type field, a topology identification length field and a topology identification value field.

7. The method according to claim 1, wherein at least one of the network slice information or the network topology information is configured in a join source address field in the protocol independent multicast called PIM join packet; and the join source address field carries source address information or rendezvous point called RP address information.

8. A multicast packet transmission method, applied to a first network node, comprising:
configuring at least one of network slice information or network topology information into a first protocol independent multicast called PIM join packet; and
transmitting a configured first protocol independent multicast called PIM join packet to a second network node.

9. The method according to claim 8, wherein the method further comprises:
receiving a third protocol independent multicast called PIM join packet transmitted by a third network node, wherein the third protocol independent multicast called PIM join packet comprises at least one of network slice information or network topology information; and
determining the second network node according to the third protocol independent multicast called PIM join packet.

10. The method according to claim 9, wherein determining the second network node according to the third protocol independent multicast called PIM join packet comprises:
obtaining a unicast routing according to the third protocol independent multicast called PIM join packet; and
determining the second network node according to the unicast routing.

11. The method according to claim 10, wherein the unicast routing is obtained by at least one of:
obtaining the unicast routing according to the network slice information or network topology information in the third protocol independent multicast called PIM join packet; or
obtaining the unicast routing by a best-effort forwarding mode.

12. The method according to claim 11, wherein obtaining the unicast routing according to the network slice information or network topology information in the third protocol independent multicast called PIM join packet comprises:
determining network slice or network topology according to at least one of the network slice information or network topology information in the third protocol independent multicast called PIM join packet; and
determining the unicast routing within the network slice or network topology.

13. The method according to claim 12, wherein at least one of the network slice information or the network topology information is configured in a join source address field in the protocol independent multicast called PIM join packet; the join source address field carries source address information or rendezvous point called RP address information; and
determining the unicast routing within the network slice or network topology comprises:
determining the unicast routing according to address information and network slice information carried in the join source address field;
or, determining the unicast routing according to address information and network topology information carried in the join source address field;
or, determining the unicast routing according to address information, network slice information and network topology information carried in the join source address field.

14. The method according to claim 9, wherein the third protocol independent multicast called PIM join packet further comprises vector attribute information;
determining the second network node according to the third protocol independent multicast called PIM join packet comprises:
determining the second network node according to one of the network slice information, network topology information or vector attribute information in the third protocol independent multicast called PIM join packet.

15. A network device, comprising:
a memory, a processor, and a computer program stored on the memory and executable on the processor;
the processor, when executing the computer program, implements the packet generation method according to any one of claims 1 to 7, or the multicast packet transmission method according to any one of claims 8 to 14.

16. A computer-readable storage medium storing computer-executable instructions, wherein the computer-executable instructions are used to execute the packet generation method according to any one of claims 1 to 7, or the multicast packet transmission method according to any one of claims 8 to 14.

17. A computer program product comprising a computer program or computer instruction, wherein the computer program or computer instruction is stored in a computer-readable storage medium, a processor of a computer device reads the computer program or computer instruction from the computer-readable storage medium, and the processor executes the computer program or computer instruction, such that the computer device executes the packet generation method according to any one of claims 1 to 7, or the multicast packet transmission method according to any one of claims 8 to 14.
